# EUROPÄISCHE PATENTANMELDUNG

(11) **EP 4 790 774 A1**
(43) Veröffentlichungstag der Anmeldung: **12.08.2026**
(21) Anmeldenummer: 25156121.3
(22) Anmeldetag: 05.02.2025
(51) Int. Cl.: H01M 10/04, H01M 10/0525, H01M 10/0587, H01M 50/536

(54) **VERFAHREN ZUR HERSTELLUNG EINES ELEKTROCHEMISCHEN ENERGIESPEICHERELEMENTS**

(71) Anmelder: V4Smart GmbH & Co. KG, 86720 Nördlingen (DE)
(72) Erfinder: Drews, Verena, 89537 Giengen (DE); Frank, Waldemar, 73479 Ellwangen (DE); Geiger, Michael, 73479 Ellwangen (DE); Kieninger, Dominik, 73492 Rainau (DE); Köder, Philipp, 74424 Bühlertann (DE)
(74) Vertreter: Ostertag & Partner Patentanwälte mbB

(57) **Zusammenfassung**

Es wird ein Verfahren zur Herstellung eines elektrochemischen Energiespeicherelements (100) mit einem wickelförmigen Elektroden-Separator-Verbund (104) und einem Gehäuse (101, 102) vorgeschlagen. Die bandförmigen Elektroden des Elektroden-Separator-Verbunds umfassen mindestens eine Anode und mindestens eine Kathode. Die Anode und/oder die Kathode umfassen jeweils einen Stromkollektor, der einen streifenförmigen Hauptbereich aufweist, der mit einer Schicht aus negativem bzw. positivem Elektrodenmaterial beladen ist, sowie einen freien Randstreifen (106b, 109b), der nicht mit dem Elektrodenmaterial beladen ist. Die Anode und/oder die Kathode sind innerhalb des Elektroden-Separator-Verbunds (104) derart angeordnet, dass der freie Randstreifen (106b, 109b) des oder der Stromkollektoren aus der jeweiligen Stirnseite des Elektroden-Separator-Verbunds unter Bildung eines Überstands austritt. Auf mindestens einer der Stirnseiten (104a, 104b) des Elektroden-Separator-Verbunds wird ein Kontaktblechteil (112, 122) aufgesetzt und unter Deformation des jeweiligen Überstands des Stromkollektors an der Stirnseite angepresst und mit dem Elektroden-Separator-Verbund (104) verschweißt. Das Verfahren ist weiter dadurch gekennzeichnet, dass der Elektroden-Separator-Verbund (104) mit dem mindestens einen aufgesetzten Kontaktblechteil (112, 122) während des Anpressens und Verschweißens der Kontaktblechteile axial fixiert wird, und dass die axiale Fixierung durch radiales Einspannen am Umfang des Wickelmantels erfolgt.

## Beschreibung

Die vorliegende Erfindung betrifft ein Verfahren zur Herstellung eines elektrochemische Energiespeicherelements. Weiterhin betrifft die Erfindung eine elektrochemische Energiespeicherzelle, die mit einem solchen Verfahren herstellbar ist.

### ANWENDUNGSGEBIET UND STAND DER TECHNIK

Jedes elektrochemisches Energiespeicherelement im Sinne der vorliegenden Anmeldung umfasst mindestens eine positive und mindestens eine negative Elektrode, welche durch einen Separator voneinander getrennt sind. In elektrochemischen Energiespeicherelementen findet eine elektrochemische, energieliefernde Reaktion statt, welche sich aus zwei elektrisch miteinander gekoppelten, aber räumlich voneinander getrennten Teilreaktionen zusammensetzt. Eine bei vergleichsweise niedrigem Redoxpotential stattfindende Teilreaktion läuft an der negativen Elektrode ab. Eine andere Teilreaktion läuft bei vergleichsweise hohem Redoxpotential an der positiven Elektrode ab. Bei der Entladung werden an der negativen Elektrode durch einen Oxidationsprozess Elektronen freigesetzt. Dies resultiert in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Zeitgleich kommt es zum Zwecke des Ladungsausgleichs zu einem der Elektrodenreaktion entsprechenden Ionenstrom innerhalb des elektrochemischen Energiespeicherelements. Dieser Ionenstrom durchquert den Separator und wird durch einen ionenleitenden Elektrolyten ermöglicht.

In sekundären (wieder aufladbaren) elektrochemischen Energiespeicherelementen ist diese Entladereaktion reversibel. Es besteht also die Möglichkeit, die bei der Entladung erfolgte Umwandlung der chemischen Energie in elektrische Energie wieder umzukehren. Die bei sekundären Energiespeicherelementen allgemein übliche Bezeichnung der negativen Elektrode als Anode und die Bezeichnung der positiven Elektrode als Kathode bezieht sich auf die Entladefunktion der elektrochemischen Zelle.

Ein oftmals verwendetes elektrochemisches Energiespeicherelement ist die Lithium-Ionen-Zelle. Die Lithium-Ionen-Zelle umfasst Elektroden, die Lithium-Ionen reversibel aufnehmen und wieder abgeben können, sowie einen Lithium-Ionen enthaltenden Elektrolyten. Lithium-Ionen-Zellen können hohe Ströme bereitstellen und zeichnen sich durch eine vergleichsweise hohe Energiedichte aus.

Die negative Elektrode und die positive Elektrode einer Lithium-Ionen-Zelle werden in der Regel von sogenannten Kompositelektroden gebildet, die neben elektrochemisch aktiven Komponenten auch elektrochemisch inaktive Komponenten umfassen.

Als elektrochemisch aktive Komponenten (Aktivmaterialien) für sekundäre Lithium-Ionen-Zellen kommen prinzipiell sämtliche Materialien in Frage, die Lithium-Ionen aufnehmen und wieder abgeben können. Für die negative Elektrode werden hierfür beispielsweise Partikel auf Kohlenstoffbasis, wie beispielsweise graphitischer Kohlenstoff, eingesetzt. Als Aktivmaterialien für die positive Elektrode können beispielsweise Lithiumcobaltoxid (LiCoO₂), Lithiummanganoxid (LiMn₂O₄), Lithiumeisenphosphat (LiFePO₄) oder Derivate hiervon eingesetzt werden. Die elektrochemisch aktiven Materialien sind in der Regel in Partikelform in den Elektroden enthalten.

Als elektrochemisch inaktive Komponenten umfassen die Kompositelektroden im Allgemeinen einen flächigen und/oder bandförmigen Stromkollektor, beispielsweise eine metallische Folie, der als Träger für das jeweilige Aktivmaterial dient. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein.

Weiterhin können die Elektroden als elektrochemisch inaktive Komponenten einen Elektrodenbinder (z. B. Polyvinylidenfluorid (PVDF) oder ein anderes Polymer, beispielsweise Carboxymethylzellulose), leitfähigkeitsverbessernde Additive und andere Zusätze umfassen. Der Elektrodenbinder gewährleistet die mechanische Stabilität der Elektroden und häufig auch die Haftung des Aktivmaterials auf den Stromkollektoren.

Als Elektrolyten umfassen Lithium-Ionen-Zellen meist Lösungen von Lithiumsalzen wie Lithiumhexafluorophosphat (LiPF₆) in organischen Lösungsmitteln (z. B. Ether und Ester der Kohlensäure).

Die Kompositelektroden werden im Allgemeinen bei der Herstellung einer Lithium-Ionen-Zelle mit einem oder mehreren Separatoren zu einem Elektroden-Separator-Verbund kombiniert. Hierbei werden die Elektroden und Separatoren oft, allerdings keinesfalls zwingend, unter Druck, gegebenenfalls auch durch Lamination oder durch Verklebung, miteinander verbunden.

Die grundsätzliche Funktionsfähigkeit der Zelle kann dann durch Tränkung des Verbunds mit dem Elektrolyten hergestellt werden.

Bei elektrochemischen Energiespeicherelementen und insbesondere auch bei Lithium-Ionen-Zellen sind verschiedene Bauformen bekannt. Neben prismatischen Formen sind Knopfzellen und zylindrische Rundzellen weit verbreitet. Sowohl Knopfzellen als auch Rundzellen haben eine runde und insbesondere eine kreisförmige Grundfläche. Dabei unterscheiden sich zylindrische Rundzellen von Knopfzellen darin, dass Knopfzellen eine Höhe aufweisen, die geringer als ihr Durchmesser ist. Zylindrische Rundzellen weisen hingegen eine Höhe auf, die größer als ihr Durchmesser ist.

Die Gehäuse bei elektrochemischen Energiespeicherelementen sind oftmals aus einem becherartigen Element (kurz: Becher) und einem deckelartigen Element (kurz: Deckel) zusammengesetzt. Im Inneren des Gehäuses werden die elektrochemischen Komponenten des Energiespeicherelements angeordnet und elektrisch mit dem Gehäuse und/oder den Polen des Energiespeicherelements kontaktiert.

Insbesondere bei Energiespeicherelementen mit zylindrischer Bauform kann der Elektroden-Separator-Verbund in Form eines Wickels gebildet oder zu einem Wickel verarbeitet sein. Für die Herstellung werden beispielsweise eine bandförmige positive Elektrode und eine bandförmige negative Elektrode sowie mindestens ein bandförmiger Separator separat einer Wickelmaschine zugeführt und in dieser zu einem Wickel mit der Sequenz positive Elektrode / Separator / negative Elektrode spiralförmig aufgewickelt. In anderen Fällen werden eine bandförmige positive Elektrode und eine bandförmige negative Elektrode sowie mindestens ein bandförmiger Separator zunächst zu einem Elektroden-Separator-Verbund kombiniert, beispielsweise unter Anwendung des erwähnten Drucks. In einem weiteren Schritt wird dann der Verbund aufgewickelt.

Für Anwendungen im Automobilbereich, für E-Bikes oder auch für andere Anwendungen mit hohem Energiebedarf, wie z.B. in elektrischen Werkzeugen, werden Lithium-Ionen-Zellen mit möglichst hoher Energiedichte benötigt, die gleichzeitig in der Lage sind, mit hohen Strömen beim Laden und Entladen belastet zu werden.

Energiespeicherzellen mit einem Elektroden-Separator-Verbund in Form eines Wickels für die genannten Anwendungen werden üblicherweise als zylindrische Rundzellen ausgebildet, die häufig eine Länge bzw. Höhe zwischen 50 mm bis 150 mm und einen Durchmesser im Bereich von 15 mm bis 60 mm haben. Moderne Lithium-Ionen-Zellen mit beispielsweise dem Formfaktor 21 × 70 (Durchmesser mal Höhe in mm) können eine Energiedichte von bis zu 270 Wh/kg erreichen.

Herkömmlicherweise erfolgt das elektrische Kontaktieren der Elektroden eines Energiespeicherelements mit den elektrischen Polen des jeweiligen Gehäuses über streifenförmige Metallbleche (*Tabs*), die an einem Ende mit den Elektroden verschweißt und an dem anderen Ende an Komponenten des Gehäuses angeschlossen werden.

In den letzten Jahren wurden verstärkt Lithium-Ionen-Zellen entwickelt, bei denen die Elektroden mittels eines sogenannten "*Tabless*-Designs" kontaktiert werden. Hierbei wird auf die erwähnten *Tabs* teilweise oder ganz verzichtet. Stattdessen werden wickelförmige Elektroden-Separator-Verbünde gefertigt, bei denen die Elektroden metallische Stromkollektoren (Stromkollektorfolien) mit unbeschichteten Längsrändern (freie Randstreifen) aufweisen, welche an den Stirnseiten des Wickels aus dem Wickel herausragen. Dort können metallische Kontaktblechteile auf die Längsränder aufgeschweißt werden, wie das beispielsweise in der WO 2017/215900 A1 beschrieben ist. Dadurch ist es möglich, den Stromkollektor und damit auch die dazugehörige Elektrode über seine bzw. ihre gesamte Länge elektrisch zu kontaktieren. Dies senkt den Innenwiderstand innerhalb der Zellen sehr deutlich. Das Auftreten großer Ströme kann in der Folge sehr viel besser abgefangen und auch Wärme kann besser aus dem Elektrodenwickel abgeführt werden.

Für die Herstellung der Wickelbaugruppe mit dem wickelförmigen Elektroden-Separator-Verbund und den angefügten Kontaktblechteilen werden üblicherweise die Kontaktblechteile von der jeweiligen Seite des wickelförmigen Elektroden-Separator-Verbunds verfahrend an die Stirnseiten des Wickels angepresst und angeschweißt, oftmals mittels Laser. Für diesen Vorgang wird der wickelförmige Elektroden-Separator-Verbund üblicherweise auf einer prismatischen Aufnahme auf der Seite liegend angeordnet, so dass die Kontaktblechteile jeweils stirnseitig angebracht werden können. Bei anderen Herstellungsverfahren wird der wickelförmige Elektroden-Separator-Verbund mittels einer zylindrischen Führung während der Anbringung der Kontaktblechteile ausgerichtet.

Problematisch hierbei ist, dass aus dem Anpressen der Kontaktblechteile an beiden Stirnseiten des Wickels eine unsymmetrische Verpressung an beiden Stirnseiten resultieren kann, da allgemein eine Deformation in den stirnseitigen Bereichen vor allem dort stattfindet, wo der geringste Widerstand besteht. Insbesondere durch unterschiedliche Material- und Geometrieeigenschaften in den stirnseitigen Bereichen des Wickels führt der an den Stirnseiten angelegte Druck zu einer ungleichmäßigen Verformung der freien Randstreifen der Stromkollektorfolien. Gründe für die unterschiedlichen Material- und Geometrieeigenschaften in den stirnseitigen Bereichen des Wickels liegen vor allem in der unterschiedlichen Foliendicke und in den unterschiedlichen Folienmaterialeigenschaften der überstehenden unbeschichteten Randbereiche der Stromkollektorfolien und in den jeweiligen Geometrien, insbesondere in Hinsicht auf die Breite der überstehenden unbeschichteten Randstreifen der Stromkollektorfolien an beiden Stirnseiten des Elektrodenwickels. Weiterhin spielen Schwankungen bedingt durch den Fertigungsprozess des Elektrodenwickels und Schwankungen bedingt durch verschiedene Materialchargen eine Rolle. Wenn beispielsweise die Stromkollektorfolie aus Aluminium im kathodenseitigen Stirnbereich des Elektrodenwickels dünner als die Stromkollektorfolie aus Kupfer im anodenseitigen Stirnbereich des Elektrodenwickels ist, findet die Deformation vor allem am kathodenseitigen Stirnbereich statt, so dass die Deformation kathodenseitig bereits kritische Bereiche erreichen kann, bevor eine signifikante Deformation am anodenseitigen Stirnbereich stattfindet.

Da aus diesen Gründen nicht kontrolliert werden kann, welche Sitrnseite des Wickels wie weit anteilig verpresst wird, wird üblicherweise die Gesamtverpressung entsprechend gering gehalten. Andernfalls könnte es durch einseitiges Überpressen zu einer Beschädigung des Separators kommen, was zu einem internen Kurzschluss führen würde. Dieses sicherheitsbedingte Vorhalten der Gesamteinpresstiefe hat allerdings den Nachteil, dass das Innenvolumen der Zelle und damit deren potentielle Kapazität nicht maximal ausgenutzt werden kann.

### AUFGABE UND LÖSUNG

Der vorliegenden Erfindung liegt daher die Aufgabe zugrunde, ein verbessertes Herstellungsverfahren für elektrochemische Energiespeicherelemente mit wickelförmigen Elektroden-Separator-Verbünden in einem *Tabless*-Design anzugeben, das die beschriebenen Nachteile vermeidet.

Zur Lösung dieses Problem schlägt die vorliegende Erfindung ein Verfahren zur Herstellung eines elektrochemischen Energiespeicherelements mit einem Elektroden-Separator-Verbund und einem Gehäuse mit den folgenden Verfahrensschritten vor:
a) Es wird ein Elektroden-Separator-Verbund in Form eines zylindrischen Wickels mit einer ersten endständigen Stirnseite und einer zweiten endständigen Stirnseite und einem dazwischen liegenden Wickelmantel bereitgestellt, wobei
   i. der Elektroden-Separator-Verbund aus bandförmigen Elektroden und mindestens einem bandförmigen Separator besteht,
   ii. die bandförmigen Elektroden und der bandförmige Separator um eine Wickelachse, die das axiale Zentrum des Wickels definiert, herum aufgewickelt sind,
   iii. die bandförmigen Elektroden mindestens eine Anode und mindestens eine Kathode umfassen, wobei
      - die Anode einen Anodenstromkollektor umfasst, der einen streifenförmigen Hauptbereich aufweist, der mit einer Schicht aus negativem Elektrodenmaterial beladen ist, sowie einen freien Randstreifen, der sich entlang eines Längsrands des Anodenstromkollektors erstreckt und der nicht mit dem negativen Elektrodenmaterial beladen ist, und/oder
      - die Kathode einen Kathodenstromkollektor umfasst, der einen streifenförmigen Hauptbereich aufweist, der mit einer Schicht aus positivem Elektrodenmaterial beladen ist, sowie einen freien Randstreifen, der sich entlang eines Längsrands des Kathodenstromkollektors erstreckt und der nicht mit dem positiven Elektrodenmaterial beladen ist, und wobei
      - die Anode und/oder die Kathode innerhalb des Elektroden-Separator-Verbunds derart angeordnet sind, dass der freie Randstreifen des Anodenstromkollektors aus der ersten endständigen Stirnseite unter Bildung eines Überstands austritt und/oder der freie Randstreifen des Kathodenstromkollektors aus der zweiten endständigen Stirnseite unter Bildung eines Überstands austritt,
b) auf mindestens einer der Stirnseiten des Elektroden-Separator-Verbunds wird ein Kontaktblechteil aufgesetzt,
c) das mindestens eine aufgesetzte Kontaktblechteil wird unter Deformation des jeweiligen Überstands des Anodenstromkollektors bzw. des Kathodenstromkollektors an der Stirnseite angepresst und mit dem Elektroden-Separator-Verbund verschweißt,
d) der Elektroden-Separator-Verbund mit dem mindestens einen Kontaktblechteil wird in ein Gehäuse eingesetzt,
e) der Elektroden-Separator-Verbund mit dem mindestens einen Kontaktblechteil wird mit dem Gehäuse elektrisch kontaktiert.

Das Verfahren ist weiter dadurch gekennzeichnet, dass
f) der Elektroden-Separator-Verbund mit dem mindestens einen aufgesetzten Kontaktblechteil während des Anpressens und Verschweißens im Schritt c) axial fixiert wird, und dass
g) die axiale Fixierung durch radiales Einspannen am Umfang der Wickelmantels erfolgt.

Bei diesem Verfahren wird der wickelförmige Elektroden-Separator-Verbund (nachfolgend auch als Elektrodenwickel bezeichnet) während des stirnseitigen Anpressens des oder Kontaktblechteile axial fixiert. Für den Anpressvorgang des oder der Kontaktblechteile an dem oder den stirnseitigen Bereichen des Elektrodenwickels wird dadurch ein fixierter Gegenpart gebildet, so dass die an den Stirnseiten wirkenden Kräfte sich im Wesentlichen nicht mehr gegenseitig beeinflussen und der Anpressvorgang in besonders vorteilhafter Weise kontrolliert werden kann. Die Anpressung der Kontaktblechteile an den Stirnseiten des Elektrodenwickels kann somit in kontrollierter Weise erfolgen und es kommt nicht zu einer unerwünschten ungleichmäßigen und asymmetrischen Deformation der Stromkollektorüberstände. Insbesondere kann hierdurch eine übermäßiger Verpressung an einer oder an beiden Stirnseiten des Elektrodenwickels sicher vermieden werden. Eine übermäßige Verpressung würde zu einer Beschädigung des Separators und damit zu der Ausbildung von internen Kurzschlüssen führen.

Weiterhin kann durch diesen verbesserten Prozess beim Kontaktieren der anoden- und/oder kathodenseitigen Enden des Elektrodenwickels im Bereich der Stirnseiten ein höherer Verpressungsgrad erreicht werden. So kann bei gleichem Platzbedarf eine breitere Beschichtungsbreite bei den Elektrodenbändern eingesetzt werden, wodurch die Zellkapazität durch optimierte Ausnutzung des Innenvolumens der Zelle gesteigert werden kann. Durch den bei diesem Verfahren möglichen hohen Verpressungsgrad ist also eine optimierte Volumenausnutzung in der Zelle möglich, die sich in einer erhöhten Kapazität niederschlägt.

Durch die axiale Fixierung während des Anpressens des oder der Kontaktblechteile ist eine gezielte und kontrollierbare axiale Kompression des jeweiligen Stromkollektorüberstandes möglich, so dass der Kompressionsgrad insgesamt und/oder jeweils separat für die beiden Enden des Elektrodenwickels präzise und frei eingestellt werden kann. Der Kompressionsgrad beschreibt hierbei den Grad der Verpressung des oder der von den freien Randstreifen der Stromkollektoren gebildeten Überstände. Ein sicherheitsbedingtes Vorhalten der Gesamteinpresstiefe erübrigt sich dadurch.

Durch die erfindungsgemäß möglichen sehr hohen Verpressungsgrade ist es zudem möglich, dass der Elektrodenwickel im Vergleich mit herkömmlichen Zellen wesentlich höhere axiale Kräfte übertragen kann, was für manche Anwendungen der elektrochemischen Energiespeicherelemente sehr vorteilhaft sein kann. Insbesondere bietet dies auch Vorteile beim Einbringen des Elektrodenwickels in ein Gehäuse und der weiteren Montage. Beispielsweise beim Gehäuseverschluss durch Bördelung können große Kräfte auf die Stirnseiten von Elektrodenwickeln wirken, nämlich weil eine Dichtung gegen die Stirnseite gedrückt wird. Diesen Kräften können axial verpresste Elektrodenwickel sehr viel besser entgegenwirken.

Ein weiterer besonderer Vorteil ergibt sich im Hinblick auf die Abdichtfunktion bei der Montage der Energiespeicherelemente. Die Abdichtfunktion kann durch die hohe Kraftaufnahme des Elektrodenwickels gestützt werden, da sich die Dichtung an den Elektrodenwickel anpressen lässt.

Durch die Verschweißung gemäß dem vorgenannten Schritt c) wird eine stoffschlüssige Verbindung des freien Randstreifens des jeweiligen Stromkollektors mit dem jeweiligen Kontaktblechteil hergestellt. Auch dieser Schweißvorgang wird durch die axiale Fixierung des Elektrodenwickels erleichtert. Insbesondere wird durch die gezielte axiale Kompression der stirnseitigen Überstände der Stromkollektoren (Stromkollektorfolien) der Separator zuverlässig abgeschirmt, so dass interne Kurzschlüsse vermieden werden. Zudem wird durch die gezielte axiale Kompression eine größere Wärmesenke auf der Rückseite des jeweiligen Kontaktblechteils gebildet, wodurch der Schweißvorgang in besonders effizienter Weise durchgeführt werden kann. Weiterhin ergibt sich durch den dicht verpressten Überstand der jeweiligen Stromkollektorfolie im stirnseitigen Bereich des Wickels ein besonders gutes Verhältnis der Fügepartner, also des dünnen Kontaktblechteils und des dicht verpressten Wickelendes. Schließlich treten durch die kontrollierte und maximierte Verpressung an den Wickelenden weniger Hohlräume in diesem Bereich auf, wodurch ebenfalls der Schweißvorgang erleichtert und zugleich die Volumenausnutzung im Inneren der Zelle optimiert wird.

In besonders vorteilhaften Ausführungsformen des erfindungsgemäßen Verfahrens ist das folgende zusätzliche Merkmal vorgesehen:
a) Das radiale Einspannen erfolgt mittels eines Backenfutters, insbesondere mittels eines mehrsegmentigen Backenfutters.

Insbesondere mit einem mehrsegmentigen Backenfutter ist eine axiale Fixierung des Elektrodenwickels in besonders zuverlässiger Weise möglich. Mit einem Backenfutter kann der Elektrodenwickel am gesamten Umfang der Mantelfläche gleichmäßig gegriffen und axial fixiert werden.

Das Angriffsmittel für das radiale Einspannen, also beispielweise das Backenfutter, greift in bevorzugten Ausgestaltungen des Verfahrens im mittigen Bereich der Längserstreckung des Elektrodenwickels an. Vorzugsweise erfasst das Angriffsmittel 70 - 90 % der Längserstreckung des Elektrodenwickels. In besonders bevorzugten Ausgestaltungen des Verfahrens erstreckt sich die Angriffszone des Angriffsmittels auf 80 - 85 % der Längserstreckung des Elektrodenwickels.

Bevorzugterweise erfolgt das Anpressen des mindestens einen Kontaktblechteils an der jeweiligen Stirnseite des Elektrodenwickels und das Verschweißen des Kontaktblechteils in einem Arbeitsschritt.

In besonders bevorzugten Ausführungsformen des erfindungsgemäßen Verfahrens ist das folgende zusätzliche Merkmal vorgesehen:
a) Das Verschweißen des mindestens einen Kontaktblechteils mit dem Elektroden-Separator-Verbund erfolgt durch eine Laserbehandlung.

Die Durchführung des Verschweißens durch eine Laserbehandlung ist besonders bevorzugt, da die Verschweißung mit dieser Methode sehr präzise und genau bei geringer Wärmebelastung durchgeführt werden kann. Zudem ist das Laserschweißen mit hoher Geschwindigkeit möglich und lässt sich sehr gut automatisieren.

Bei dem erfindungsgemäßen Verfahren kann es vorsehen sein, dass für die Kontaktierung der Elektroden nur auf einer Seite des Wickels ein Kontaktblechteil vorgesehen ist, so dass nur eine der Elektroden über ein Kontaktblechteil kontaktiert wird. Die andere Elektrode wird auf andere Weise kontaktiert, beispielsweise mittels eines eingangs beschriebenen *Tab.* In diesen Ausführungsformen wird der Druck zum Anpressen des Kontaktblechteils an die jeweilige Stirnseite des Wickels zweckmäßigerweise nur einseitig angelegt. Für solche Ausführungsformen ist das erfindungsgemäße Verfahren besonders geeignet, da durch die axiale Fixierung des Elektrodenwickels ein asymmetrisch angesetzter axialer Druck besonders gut kontrolliert werden kann.

In besonders bevorzugten Ausgestaltungen des erfindungsgemäßen Verfahrens ist das folgende zusätzliche Merkmal vorgesehen:
a) Es wird auf beiden Stirnseiten des Elektroden-Separator-Verbunds jeweils ein Kontaktblechteil aufgesetzt und an der jeweiligen Stirnseite angepresst und verschweißt.

In diesen Ausführungsformen werden sowohl die Anode als auch die Kathode an den jeweiligen Stirnseiten des Elektrodenwickels über jeweils ein Kontaktblechteil elektrisch kontaktiert. Bei den Kontaktblechteilen kann es sich insbesondere um an sich bekannte scheibenförmige Kontaktplatten handeln.

Vorzugsweise wird zum Anpressen des jeweiligen Kontaktblechteils an den beiden Stirnseiten des Elektroden-Separator-Verbunds an beiden Stirnseiten ein axialer Druck ausgeübt.

In bevorzugten Ausführungsformen ist es vorgesehen, dass der angelegte axiale Druck, insbesondere der beidseitig angelegte axiale Druck, steuer- und/oder regelbar ist.

Es kann vorgesehen sein, dass der auf beiden Seiten angelegte Druck gleich ist (symmetrisches Verpressen).

In anderen Ausführungsformen ist das folgende zusätzliche Merkmal vorgesehen:
a) Der an beiden Stirnseiten ausgeübte axiale Druck ist unterschiedlich.

In dieser bevorzugten Ausführungsform des Verfahrens mit einem asymmetrisch angesetzten Druck ist es mit besonderem Vorteil möglich, dass durch den unterschiedlich stark wirkenden Druck an beiden Enden des Elektrodenwickels eine gleichmäßige Deformation der jeweiligen Überstände der Stromkollektoren an den beiden Stirnseiten des Elektrodenwickels stattfindet, auch wenn die Materialbeschaffenheiten und Geometrien im Bereich der Stirnseiten des Elektrodenwickels unterschiedlich sind. Wenn z. B. die Foliendicke der Stromkollektorbänder und/oder die Weichheit des Materials und/oder die Breite der freien Randstreifen der Stromkollektoren unterschiedlich sind, kann durch die Kontrolle des beidseitig angelegten Drucks und durch den Widerpart mittels der erfindungsgemäßen axialen Fixierung des Elektrodenwickels eine maximale Verpressung an den Stirnseiten des Elektrodenwickels erzielt werden, ohne dass die Gefahr einer Überpressung an einer der Stirnseiten und damit die Gefahr eines internen Kurzschlusses besteht.

In weiteren bevorzugten Ausführungsformen des erfindungsgemäßen Verfahrens kann das folgende zusätzliche Merkmal vorgesehen sein:
a) Die freien Randstreifen des Kathodenstromkollektors und/oder des Anodenstromkollektors werden vor dem Aufsetzen des mindestens einen Kontaktblechteils zumindest abschnittsweise radial nach innen umgebogen.

Die Vorteile dieser Ausführungsform des erfindungsgemäßen Verfahrens kommen insbesondere in solchen Fällen zum Tragen, in denen der Durchmesser der Stirnseiten des Elektrodenwickels größer als der Durchmesser der Kontaktblechteile ist.

Dieser Ausführungsform liegt das Problem zugrunde, dass aus montagetechnischen sowie aus Sicherheitsgründen die Kontaktblechteile, beispielsweise scheibenförmige Kontaktblechteile, nicht über die Ränder der Stirnseiten des Elektrodenwickels hinausstehen sollten. Zu groß ist sonst die Gefahr eines ungewollten Kontakts der Kontaktblechteile mit dem Zellgehäuse. Hinzu kommen teilweise hohe Einzelteiltoleranzen sowie eine beschränkte Positionierungsgenauigkeit beim Aufschweißen der Kontaktblechteile. Aus diesen Gründen kann es sinnvoll sein, dass die Kontaktblechteile im Durchmesser kleiner als der Wickeldurchmesser ausgeführt werden. Hinzu kommt, dass beim Aufschweißen der Kontaktblechteile auch die Schweißnahtpositionierung gewissen Fertigungstoleranzen unterliegt und die Schweißung somit nicht bis an den äußeren Rand der Kontaktblechteile ausgeführt werden kann. Daraus resultiert, dass äußere Windungen des Elektrodenwickels nicht stoffschlüssig an die Kontaktblechteile angebunden werden können und gegebenenfalls nicht in unmittelbarem Kontakt mit den Kontaktblechteilen stehen, was zu einem erhöhten Innenwiderstand führt.

Durch das vorgenannte Umbiegen der freien Randstreifen der Stromkollektoren ist gewährleistet, dass insbesondere bei Verwendung von Kontaktblechteilen, deren Durchmesser kleiner ist als der Wickeldurchmesser, die außenliegende Windung dennoch stoffschlüssig mit dem Kontaktblechteil verbunden werden kann. Durch das radiale Umbiegen des Randstreifens wird die außenliegende Windung zumindest abschnittweise im Durchmesser reduziert, so dass auch der Längsrand des Randstreifens in der äußeren Windung von dem Kontaktblechteil abgedeckt werden kann.

Besonders bevorzugt ist der von der außenliegenden Windung umfasste Bereich des Randstreifens über seine gesamte Länge radial nach innen umgebogen.

Die Erfindung umfasst weiterhin elektrochemische Energiespeicherelemente, die nach dem beschriebenen Verfahren herstellbar sind. Insbesondere zeichnen sich diese Energiespeicherelemente dadurch aus, dass die deformierten Überstände, die von den freien Randstreifen der Stromkollektoren gebildet werden, einen kontrollierten Kompressionsgrad aufweisen. Der Kompressionsgrad beschreibt hierbei das Verhältnis von Ausgangshöhe des Überstandes vor dem Anpressen des Kontaktblechteils zur Höhe des Überstandes nach der Deformation, also nach dem Anpressen und Anschweißen des Kontaktblechteils.

In besonders bevorzugten Ausgestaltungen der elektrochemischen Energiespeicherelemente sind diese durch das folgende zusätzliche Merkmal gekennzeichnet:
a) Die deformierten Überstände des Anodenstromkollektors und/oder des Kathodenstromkollektors weisen einen Kompressionsgrad von 10 - 75 %, insbesondere von 20 bis 60 %, vorzugsweise von 30 bis 50 %, besonders bevorzugt von 40 ± 5 % auf.

Die genannten prozentualen Angaben können sich dabei auf die jeweiligen Überstände des Anodenstromkollektors und/oder des Kathodenstromkollektors oder auf die Summe dieser Überstände beziehen.

In einem Ausführungsbeispiel einer Lithium-Ionen-Zelle mit dem Formfaktor 18650 kann beispielsweise die Summe des kathodenseitigen und des anodenseitigen Überstandes der Stromkollektoren an den Stirnseiten des Elektrodenwickels vor der Verpressung zwischen 4 und 5 mm betragen. Nach der Verpressung und dem Anschweißen der Kontaktblechteile kann die Summe der Überstände zwischen 2 und 3 mm betragen.

In weiteren Ausführungsformen der elektrochemischen Energiespeicherelemente ist das folgende zusätzlichen Merkmal vorgesehen:
a) Die deformierten Überstände des Anodenstromkollektors und des Kathodenstromkollektors weisen einen identischen Kompressionsgrad auf.

Eine präzise Einstellung des Kompressionsgrades an beiden Stirnseiten des Elektrodenwickels wird durch das erfindungsgemäße Verfahren ermöglicht, indem der Elektrodenwickel während des Anpressens und des Anschweißens der Kontaktblechteile axial fixiert wird. Sofern die Materialgegebenheiten und die Geometrien der von den freien Randstreifen der Stromkollektoren gebildeten Überstände an den Stirnseiten des Elektrodenwickels unterschiedlich sind, ist es besonders vorteilhaft, dass an den beiden Stirnseiten ein unterschiedlicher axialer Druck zum Anpressen angelegt wird, um so einen identischen Kompressionsgrad an beiden Stirnseiten erreichen zu können.

Das erfindungsgemäße elektrochemisches Energiespeicherelement zeichnet sich in bevorzugten Ausführungsformen weiterhin durch mindestens eines der folgenden zusätzlichen Merkmale aus:
a) Das elektrochemische Energiespeicherelement weist ein zylindrisches Gehäuse auf,
b) das elektrochemische Energiespeicherelement ist eine zylindrische Rundzelle,
c) das elektrochemische Energiespeicherelement ist eine zylindrische Rundzelle mit dem Formfaktor 18650 oder 21700.

In besonders bevorzugter Weise sind die vorgenannten Merkmale a), b) und c) in Kombination miteinander verwirklicht. Die Erfindung ist jedoch nicht auf zylindrische Rundzellen mit einem Formfaktor von 18650 oder 21700 beschränkt. Insbesondere ist das erfindungsgemäße Verfahren auch auf größere Zellformate mit besonderem Vorteil anwendbar.

In ganz besonders bevorzugten Ausführungsformen handelt es sich bei dem erfindungsgemäß herstellbaren Energiespeicherelement um eine Lithium-Ionen-Zelle.

Durch die erfindungsgemäß erzielbare hohen Kompressionsgrade ist der Elektrodenwickel der erfindungsgemäß herstellbaren elektrochemischen Energiespeicherelemente dazu in der Lage, im Vergleich mit herkömmlichen Energiespeicherelementen höhere axiale Kräfte zu übertragen. Dies kann bei der Herstellung der Energiespeicherelemente dazu genutzt werden, dass beispielsweise auf eine Rolliersicke oder andere Werkzeugeingreifstrukturen, die für eine Bördelung beim Verschließen des Gehäuses herkömmlicherweise genutzt werden, verzichtet werden kann. In besonders bevorzugten Ausführungsformen der erfindungsgemäß herstellbaren elektrochemischen Energiespeicherelemente zeichnen sich die Energiespeicherelemente daher dadurch aus, dass sie keine Rolliersicken oder andere Werkzeugeingreifstrukturen am Gehäuse aufweisen, die herkömmlicherweise beim Verschließen einer Öffnung des Gehäusebechers dazu dienen, ein Werkzeug an dem Gehäusebecher anzusetzen. Durch den oder die deformierten und komprimierten freien Randstreifen der Stromkollektoren ist der Elektrodenwickel mit den angesetzten Kontaktblechteilen als solcher ausreichend stabil, um den beim Verschließen wirkenden axialen Kräften als Konterelement entgegenzuwirken, so dass entsprechende Abschnitte des Gehäuses zum Schließen des Gehäuses umgebogen werden können, ohne dass die Gefahr besteht, dass der Elektrodenwickel beschädigt wird.

Bezüglich weiterer Merkmale der erfindungsgemäßen Energiespeicherelemente wird auch auf die obige Beschreibung im Zusammenhang mit dem Herstellungsverfahren verwiesen.

Weitere Vorteile und Merkmale der Erfindung ergeben sich aus der nachfolgenden Beschreibung von Ausführungsbeispielen, die anhand der Zeichnungen näher erläutert werden. Hierbei können die einzelnen Merkmale jeweils für sich oder in Kombination miteinander verwirklicht sein.

### KURZE BESCHREIBUNG DER ZEICHNUNGEN

In den Zeichnungen zeigen:
- Figur 1: Illustration zum Aufbau des wickelförmigen Elektroden-Separator-Verbunds;
- Figur 2: schematische Querschnittsdarstellung eines elektrochemischen Energiespeicherelements;
- Figur 3: schematische Darstellung zur Illustration der Anbringung von Kontaktblechteilen an einen wickelförmigen Elektroden-Separator-Verbund nach einem herkömmlichen Verfahren (Stand der Technik);
- Figur 4: schematische Darstellung zur Illustration der Anbringung von Kontaktblechteilen an einen wickelförmigen Elektroden-Separator-Verbund nach dem erfindungsgemäßen Verfahren;
- Figur 5: Illustration zur Vermessung eines wickelförmigen Elektroden-Separator-Verbunds mit angesetzten Kontaktblechteilen vor und nach der Verpressung gemäß dem erfindungsgemäßen Verfahren;
- Figur 6: fotografische Darstellung des kathodenseitigen Stirnseitenbereichs eines wickelförmigen Elektroden-Separator-Verbunds mit angeschweißtem Kontaktblechteil gemäß einer herkömmlichen Fertigungsweise;
- Figur 7: fotografische Darstellungen des kathodenseitigen Stirnseitenbereichs (oben) und des anodenseitigen Stirnseitenbereichs (unten) eines wickelförmigen Elektroden-Separator-Verbunds mit angeschweißtem Kontaktblechteilen bei übermäßiger Gesamtverpressung gemäß einer herkömmlichen Fertigungsweise; und
- Figur 8: fotografische Darstellungen des kathodenseitigen Stirnseitenbereichs (oben) und des anodenseitigen Stirnseitenbereichs (unten) eines wickelförmigen Elektroden-Separator-Verbunds mit angeschweißtem Kontaktblechteilen bei erfindungsgemäßer Herstellung.

### BESCHREIBUNG BEVORZUGTER AUSFÜHRUNGSBEISPIELE

Das erfindungsgemäße Verfahren zur Herstellung eines elektrochemischen Energiespeicherelements zeichnet sich dadurch aus, dass der wickelförmige Elektroden-Separator-Verbund (Elektrodenwickel) während der Anbringung von Kontaktblechteilen an einem oder beiden stirnseitigen Bereichen des Elektrodenwickels durch radiales Einspannen axial fixiert wird. Durch diese Maßnahme wird während des Anpressens und Anschweißens des oder der Kontaktblechteile ein Gegenpart erzeugt, der einen kontrollierten Druckaufbau erlaubt und somit ermöglicht, dass der oder die von den freien Randstreifen der Stromkollektoren gebildeten Überstände in kontrollierter Weise deformiert und verpresst werden können. Insbesondere können mit diesem Verfahren beide Wickelenden gesichert gleich weit eingepresst werden.

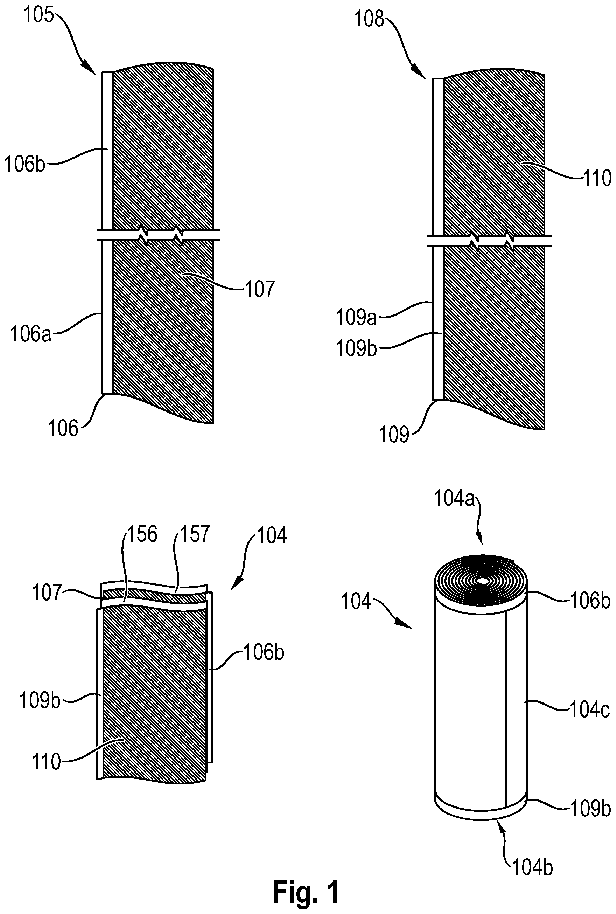

Die elektrochemischen Energiespeicherelemente, die mit dem erfindungsgemäßen Verfahren herstellbar sind, enthalten einen wickelförmigen Elektroden-Separator-Verbund, der für die Anbringung von einem oder zwei Kontaktblechteilen an einer bzw. an beiden Stirnseiten des wickelförmigen Elektroden-Separator-Verbunds eingerichtet ist. **Fig. 1** veranschaulicht den Aufbau eines solchen Elektroden-Separator-Verbunds 104. Der Verbund 104 umfasst die bandförmige Anode 105 mit dem bandförmigen Anodenstromkollektor 106, der einen ersten Längsrand 106a und einen dazu parallelen zweiten Längsrand aufweist. Bei dem Anodenstromkollektor 106 handelt es sich um eine Folie aus beispielsweise Kupfer oder Nickel. Diese umfasst einen bandförmigen Hauptbereich, der mit einer Schicht aus negativem Elektrodenmaterial 107 beschichtet ist, sowie einen freien Randstreifen 106b, der sich entlang seines ersten Längsrands 106a erstreckt und der nicht mit dem Elektrodenmaterial 107 beschichtet ist. Weiterhin umfasst der Verbund 104 die bandförmige Kathode 108 mit dem bandförmigen Kathodenstromkollektor 109, der einen ersten Längsrand 109a und einen dazu parallelen zweiten Längsrand aufweist. Bei dem Kathodenstromkollektor 109 handelt es sich insbesondere um eine Aluminiumfolie. Er umfasst einen bandförmigen Hauptbereich, der mit einer Schicht aus positivem Elektrodenmaterial 110 beschichtet ist, sowie einen freien Randstreifen 109b, der sich entlang seines ersten Längsrands 109a erstreckt und der nicht mit dem Elektrodenmaterial 110 beschichtet ist. Beide Elektroden sind im oberen Teil der Fig. 1 einzeln in ungewickeltem Zustand dargestellt.

Die Anode 105 und die Kathode 108 sind innerhalb des Elektroden-Separator-Verbunds 104 versetzt zueinander angeordnet (siehe links unten in Fig. 1), so dass der freie Randstreifen 106b des Anodenstromkollektors 106 aus der ersten endständigen Stirnseite 104a und der freie Randstreifen 109b des Kathodenstromkollektors 109 aus der zweiten endständigen Stirnseite 104b des gewickelten Elektroden-Separator-Verbunds 104 austritt (siehe rechts unten in Fig. 1). Die bandförmigen Anode 105 und die bandförmigen Kathode 108 sind im gewickelten Zustand durch bandförmige Separatoren 156 und 157 voneinander getrennt (siehe links unten in Fig. 1).

In der Darstellung rechts unten ist der Elektroden-Separator-Verbunds 104 in gewickelter Form dargestellt, wie er in einer erfindungsgemäßen Energiespeicherzelle zum Einsatz kommen kann. Der Wickelmantel 104c kann durch eine Kunststofffolie gebildet werden.

Die aus den Stirnseiten 104a und 104b des Elektrodenwickels austretenden freien Randstreifen 106b und 109b der Stromkollektoren sind frei von Elektrodenmaterial und stehen für eine elektrische Kontaktierung der Elektroden an einem Kontaktblechteil oder einer anderen Komponente des Energiespeicherelements zur Verfügung. Die freien Randstreifen 106b und 109b bilden die Überstände, die bei dem Anpressen und Anschweißen des oder der Kontaktblechteile deformiert werden.

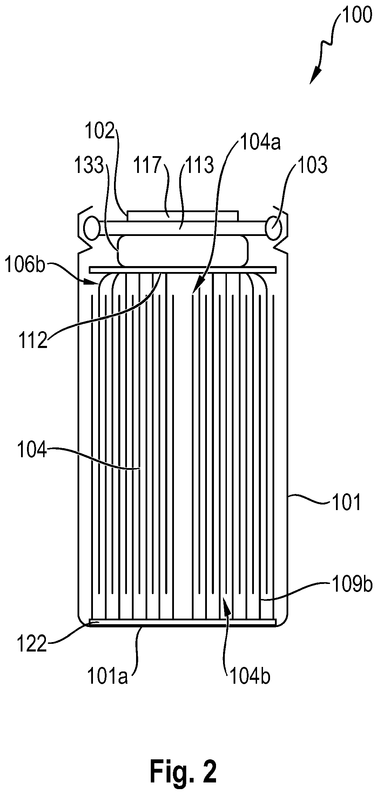

Das in **Fig. 2** schematisch dargestellte Energiespeicherelement 100 umfasst einen Elektroden-Separator-Verbund 104, der in Form eines zylindrischen Elektrodenwickels mit zwei endständigen Stirnseiten 104a und 104b und einem dazwischen liegenden Wickelmantel gemäß der Darstellung aus Fig. 1 vorliegt. Aus der (oberen) ersten endständigen Stirnseite 104a tritt in diesem Ausführungsbeispiel der freie Randstreifen 106b des Anodenstromkollektors 106 als Überstand aus. Der Randstreifen 106b ist nicht mit Elektrodenmaterial beladen. Der Randstreifen 106b ist durch Verschweißung mit dem (oberen) Kontaktblechteil 112 verbunden, das auf dem Randstreifen 106b aufsitzt und den größten Teil der ersten endständigen Stirnseite 104a abdeckt. Bei der Montage wird das Kontaktblechteil 112 an die erste endständige Stirnseite 104a angepresst, so dass sich der von dem Randstreifen 106b gebildete Überstand in hier nicht dargestellter Weise verformt.

Weiterhin umfasst das Energiespeicherelement 100 ein luft- und flüssigkeitsdicht verschlossenes Gehäuse, das einen metallischen Gehäusebecher 101 mit einer (oberen) endständigen kreisförmigen Öffnung und eine Deckelkomponente 102, welche die kreisförmige Öffnung verschließt, umfasst. Die Deckelkomponente 102 umfasst eine Metallscheibe 113, deren Unterseite den Innenraum des Gehäuses begrenzt, sowie eine Polkappe 117, die unmittelbar auf der Metallscheibe 113 aufsitzt und mit dieser in elektrischem Kontakt steht. Ein elektrischer Leiter 133 verbindet das Kontaktblechteil 112 und die Deckelkomponente 102.

Im unteren Bereich des Energiespeicherelements befindet sich ein weiteres Kontaktblechteil 122, das die (untere) zweite Stirnseite 104b des Elektrodenwickels 104 im Wesentlichen abdeckt. Dieses Kontaktblechteil 122 ist in diesem Ausführungsbeispiel mit dem freien Randstreifen 109b der Kathode verschweißt. Bei der Montage wird das Kontaktblechteil 122 an die zweite endständige Stirnseite 104b angepresst, so dass sich der von dem Randstreifen 109b gebildete Überstand in hier nicht dargestellter Weise verformt.

Das Kontaktblechteil 122 steht in unmittelbarem Kontakt mit dem Boden 101a des Gehäuses und kann mit diesem insbesondere durch Verschweißung verbunden sein. Die Verschweißung kann beispielsweise durch den Boden 101a hindurch mittels eines Lasers bewirkt werden.

Die Orientierung der Polarität des Energiespeicherelements kann selbstverständlich auch umgedreht sein.

Das Gehäuse umfasst weiterhin eine Kunststoffdichtung 103, welche den Rand der Deckelkomponente 102 umschließt und die metallischen Komponenten der Deckelkomponente 102 von dem Gehäusebecher 101 elektrisch isoliert. Gleichzeitig trägt sie dazu bei, das Gehäuse abzudichten.

Durch das Anpressen der Kontaktblechteile 112 und 122 während der Anbringung der Kontaktblechteile an die stirnseitigen Bereiche 104a und 104b des Elektrodenwickels 104 kommt es zu einer (hier nicht dargestellten) Stauchung und, bezogen auf die Längserstreckung des Elektrodenwickels 104, zu einer Kompression der von den freien Randstreifen 106b und 109b der Stromkollektoren gebildeten Überstände in axialer Richtung.

Die resultierende Energiespeicherzelle 100 umfasst folglich einen Elektroden-Separator-Verbund 104 mit in axialer Richtung komprimierten Überständen, die von den freien Randstreifen 106b und 109b der Stromkollektoren gebildeten werden.

Zusätzlich kann es vorgesehen sein, dass die äußeren Windungen des oder der freien Randstreifen der Stromkollektoren gezielt von außen nach innen radial umgebogen werden, wie es in der Darstellung der Fig. 2 für den oberen stirnseitigen Bereich 104a angedeutet ist. Das Umbiegen kann zum Beispiel in der Weise erfolgen, dass die äußeren freien Windungen des freien Randstreifens des Elektrodenstromkollektors radial nach innen umgebogen werden und zudem mit den radial weiter innenliegenden Windungen des freien Randstreifens beim Aufsetzten des Kontaktblechteils 112 vor dem Verschweißen gleichsam verpresst werden. Beispielsweise kann der Randstreifen um einen Winkel im Bereich von 30-90° umgebogen werden. Der Randstreifen kann in bevorzugten Ausführungsformen hierzu auch eingeschnitten werden.

Eine Stauchung erfolgt, indem das oder die Kontaktblechteile 112 und 122 derart auf die freien Randstreifen 106b, 109b der Stromkollektoren aufgepresst werden, dass diese deformiert werden. In vielen Fälle resultiert dies nicht in einem gerichteten Umknicken, sondern in einer ungerichteten Stauchung. So können Abschnitte des Randstreifens radial nach außen und andere Abschnitte radial nach innen umgeknickt werden.

Sowohl die Biegung als auch die Stauchung führen zu einer Auflagefläche, die von einem in Folge des Umbiegens und/oder der Stauchung verdichteten bzw. verfestigten Überstand gebildet wird.

Allgemein ausgedrückt hat ein in axialer Richtung komprimierter Überstand eine höhere Stabilität und Belastbarkeit gegen Kräfte, die in axialer Richtung auf den komprimierten Überstand wirken, als es bei einem Überstand bei einer unbelasteten Wickelkonfiguration der Fall wäre.

Der komprimierte Überstand der Stromkollektoren hat eine geringere axiale Erstreckung als ein Überstand in der besagten Wickelkonfiguration mit nicht gestauchten bzw. unbelasteten Überständen. Die axiale Erstreckung eines in axialer Richtung komprimierten Überstandes beträgt insbesondere zwischen 10 % und 80 %, vorzugsweise zwischen 20 % und 60 %, nochmals bevorzugt zwischen 30 % und 50 % und weiter bevorzugt zwischen 35 % und 45 % der axialen Erstreckung eines Überstandes in der unbelasteten Wickelkonfiguration bzw. vor der Verpressung. Gegebenenfalls kann der komprimierte Überstand auch auf eine axiale Erstreckung komprimiert sein, die weniger als 10 % der axialen Erstreckung des Überstandes in der unbelasteten Wickelkonfiguration beträgt.

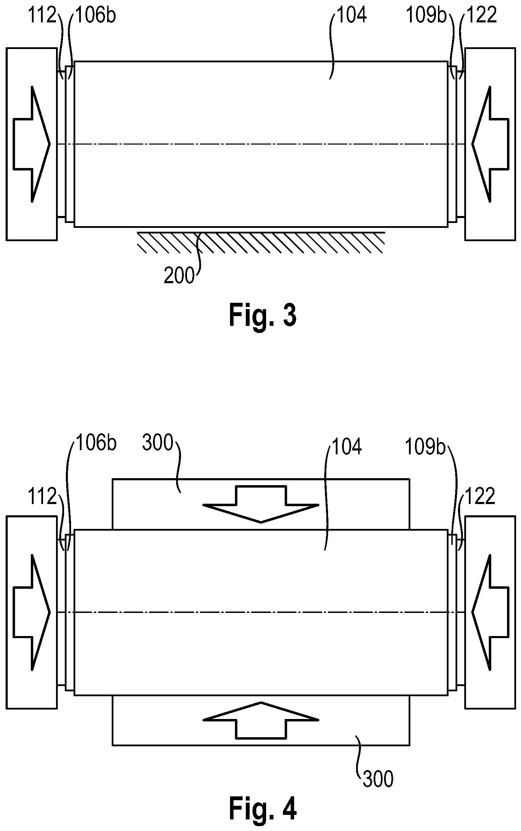

**Fig. 3** illustriert eine herkömmliche Herstellungsweise des Elektrodenwickels 104 mit stirnseitig angeschweißten Kontaktblechteilen 112 und 122. Der Elektrodenwickel wird entlang seiner Längserstreckung auf eine Aufnahme (Träger) 200 aufgelegt. Die Kontaktblechteile 112 und 122 werden verfahrend von beiden Seiten an die Stirnseiten des Elektrodenwickels 104 angepresst und zugleich angeschweißt, vorzugsweise mittels Laser. Die Kontaktblechteile 112 und 122 bilden dabei eine formschlüssige Verbindung mit den freien Randstreifen 106b und 109b der Stromkollektoren. Infolge des Anpressdrucks verformen sich die einen Überstand bildenden freien Randstreifen 106b und 109b der Stromkollektoren. Durch die unkontrollierte Verformung der Überstände kann es zu unerwünschten Effekten kommen. Eine nur leichte Verformung führt dazu, dass ungenutzter Totraum im Bereich der Stirnseiten des Elektrodenwickels entsteht. Eine zu starke Deformation birgt die Gefahr einer Beschädigung des Separators, wodurch ein interner Kurzschluss auftreten kann.

**Fig. 4** illustriert das erfindungsgemäße Verfahren. Hierbei wird der Elektrodenwickel 104 durch radiales Einspannen mittels einer Spannvorrichtung 300 zunächst am Umfang der Mantelfläche bzw. am Umfang des Wickelmantels axial fixiert und damit stabilisiert, bevor die Kontaktblechteile 112 und 122 verfahrend von beiden Seiten an die Stirnseiten des Elektrodenwickels 104 angepresst und angeschweißt werden. Als Spannvorrichtung 300 kann insbesondere ein mehrsegmentiges Backfutter verwendet werden.

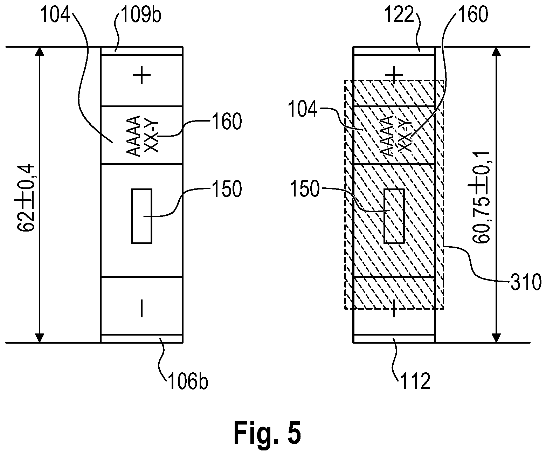

**Fig. 5** illustriert die Vermessung einer Mehrzahl von Elektrodenwickeln 104 vor und nach der Anpressung und Verschweißung der Kontaktblechteile gemäß dem erfindungsgemäßen Verfahren. Die Elektrodenwickel sind in diesem Ausführungsbeispiel für die Herstellung einer Lithium-lonen-Zelle mit dem Formfaktor 18650 vorgesehen. Die Mantelfläche des Elektrodenwickels 104 wird von einer Kunststofffolie gebildet, auf der ein Schriftfeld 150 und ein Aufdruck 160 mit einem Serialzähler vorgesehen ist.

Auf der rechten Seite der Fig. 5 ist die Angriffszone 310 des Spannmittels (z. B. ein Backenfutter) für die axiale Fixierung des Elektrodenwickels 104 während der Durchführung des erfindungsgemäßen Verfahrens durch einen eingezeichneten Rahmen angedeutet.

Auf der linken Seite der Abbildung ist der Elektrodenwickel 104 mit den von den freien Randstreifen 109b und 106b der Stromkollektoren gebildeten Überstände vor der Verpressung und Verschweißung mit den Kontaktblechteilen illustriert. Die gemessene Längserstreckung des Elektrodenwickels 104 ohne die Kontaktblechteile betrug im Mittel 62,0 ± 0,4 mm. Der freie Randstreifen (Aluminium) auf der kathodenseitigen Stirnseite betrug 3,05 ± 0,45 mm (A-Seite und B-Seite). Der freie Randstreifen (Kupfer) auf der anodenseitigen Stirnseite betrug 1,50 ± 0,25 mm (A-Seite) bzw. ± 0,45 mm (B-Seite).

Auf der rechten Seite der Abbildung ist die Vermessung des Elektrodenwickels 104 mit den angepressten Kontaktblechteilen 112 und 122 nach der Verpressung und Verschweißung illustriert, wobei die Dicke der Kontaktblechteile 0,3 mm bzw. 0,2 mm betrug. Die gemessene Längserstreckung des Elektrodenwickels 104 einschließlich der angesetzten Kontaktblechteile 112 und 122 betrug nach der Verpressung und Verschweißung im Mittel 60,75 ± 0,10 mm, wobei die Verpressung symmetrisch, also mit gleichem Druck auf beiden Seiten, erfolgte. Daraus ergab sich eine effektive Verpressung der Überstände von 1,75 mm.

Bezogen auf die Länge der Überstände ergab sich hieraus ein Kompressionsgrad um etwa 40 %, da die Überstände in der Summe vor der Anpressung und Verschweißung der Kontaktplatten 4,55 mm und nach der Anpressung und Verschweißung der Kontaktplatten 2,80 mm betrugen.

Bei dieser Geometrie des Elektrodenwickels wäre eine effektive Verpressung von bis zu 2,25 mm erreichbar.

Bei einer Verlängerung der unbeschichteten freien Randstreifen der Elektrodenstromkollektoren wären noch höhere effektive Verpressungsgrade möglich. Dies wäre insbesondere für noch größere Zellformate vorteilhaft.

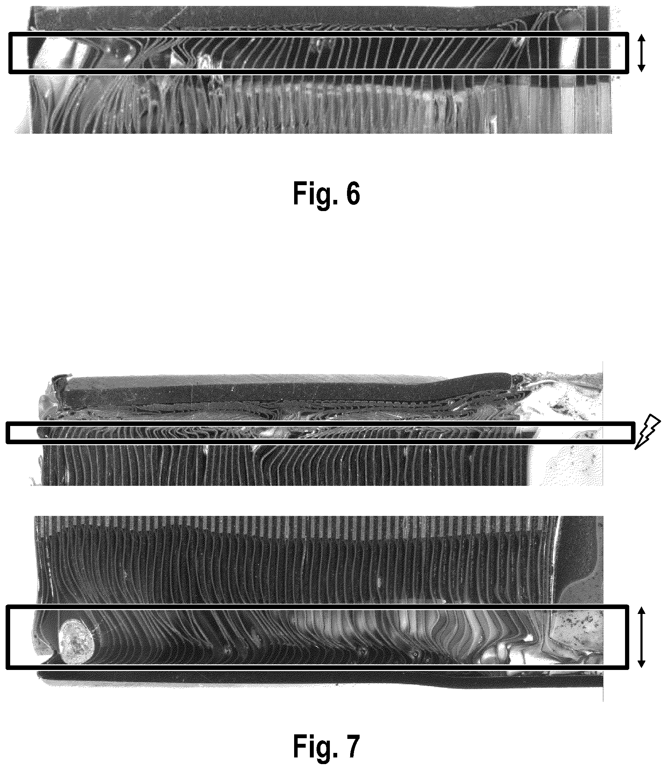

Die Fig. 6, 7 und 8 illustrieren anhand von fotografischen Darstellungen der stirnseitigen Bereiche des Elektrodenwickels mit den angeschweißten Kontaktblechteilen die Effekte des erfindungsgemäßen Verfahrens auf die Deformation in den stirnseitigen Bereichen im Vergleich mit der herkömmlichen Vorgehensweise.

**Fig. 6** zeigt die kathodenseitige Verpressung bei einer Lithium-Ionen-Zelle mit dem Formfaktor 21700 bei einer herkömmlichen Fertigungsweise. Der freie Randstreifen des von Aluminium gebildeten Anodenstromkollektors ist nur leicht deformiert, wodurch relativ viel nicht genutzter Totraum (angedeutet durch den eingezeichneten Rahmen) im Inneren der Zelle entsteht, der nichts zur Kapazität der Zelle beitragen kann.

**Fig. 7** zeigt im oberen Bereich die kathodenseitige Verpressung und im unteren Bereich die anodenseitige Verpressung bei einer Lithium-Ionen-Zelle mit dem Formfaktor 21700 bei einer herkömmlichen Fertigungsweise. In diesem Fall wurden durch eine übermäßige Deformation auf der Kathodenseite die freien Randstreifen des aus Aluminium gebildeten Kathodenstromkollektors durch den Separator auf die Anodenbeschichtung gepresst, so dass es zu Kurzschlüssen kommt (angedeutet durch den eingezeichneten Rahmen im oberen Bereich). Auf der gegenüberliegenden Anodenseite ist hingegen nur eine geringe Deformation festzustellen, wodurch ungenutzter Totraum entsteht (angedeutet durch den eingezeichneten Rahmen im unteren Bereich).

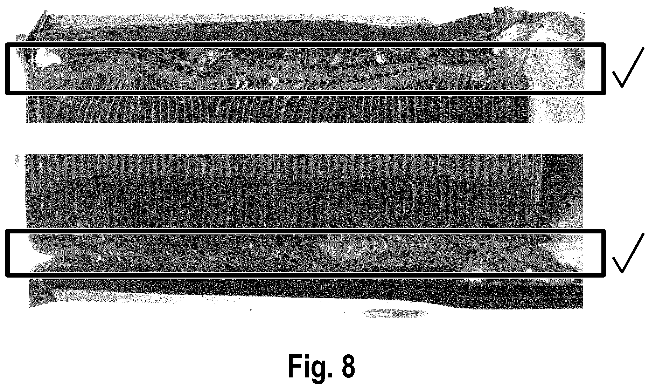

**Fig. 8** zeigt im oberen Bereich die kathodenseitige Verpressung und im unteren Bereich die anodenseitige Verpressung bei einer Lithium-Ionen-Zelle mit dem Formfaktor 21700 bei einer erfindungsgemäßen Fertigungsweise. Sowohl im Bereich der kathodenseitigen Verpressung als auch im Bereich der anodenseitigen Verpressung ist eine Deformation in einem optimalen Umfang zu beobachten, wobei weder zu viel nicht genutzter Totraum noch eine zu starke Verpressung, die zu einem Kurzschluss führen könnte, zu beobachten ist (jeweils angedeutet durch die eingezeichneten Rahmen).

## Patentansprüche

1. Verfahren zur Herstellung eines elektrochemischen Energiespeicherelements (100) mit einem Elektroden-Separator-Verbund (104) und einem Gehäuse (101, 102) mit den folgenden Verfahrensschritten:
a. Es wird ein Elektroden-Separator-Verbund (104) in Form eines zylindrischen Wickels mit einer ersten endständigen Stirnseite (104a) und einer zweiten endständigen Stirnseite (104b) und einem dazwischen liegenden Wickelmantel (104c) bereitgestellt, wobei
i. der Elektroden-Separator-Verbund (104) aus bandförmigen Elektroden (105, 108) und mindestens einem bandförmigen Separator (156, 157) besteht,
ii. die bandförmigen Elektroden (105, 108) und der bandförmige Separator (156, 157) um eine Wickelachse, die das axiale Zentrum des Wickels definiert, herum aufgewickelt sind,
iii. die bandförmigen Elektroden (105, 108) mindestens eine Anode und mindestens eine Kathode umfassen, wobei
- die Anode (105) einen Anodenstromkollektor (106) umfasst, der einen streifenförmigen Hauptbereich (107) aufweist, der mit einer Schicht aus negativem Elektrodenmaterial beladen ist, sowie einen freien Randstreifen (106b), der sich entlang eines Längsrands (106a) des Anodenstromkollektors (106) erstreckt und der nicht mit dem negativen Elektrodenmaterial beladen ist, und/oder
- die Kathode (108) einen Kathodenstromkollektor (109) umfasst, der einen streifenförmigen Hauptbereich (110) aufweist, der mit einer Schicht aus positivem Elektrodenmaterial beladen ist, sowie einen freien Randstreifen (109b), der sich entlang eines Längsrands (109a) des Kathodenstromkollektors (109) erstreckt und der nicht mit dem positiven Elektrodenmaterial (110) beladen ist, und wobei
- die Anode (105) und/oder die Kathode (108) innerhalb des Elektroden-Separator-Verbunds (104) derart angeordnet sind, dass der freie Randstreifen (106b) des Anodenstromkollektors (106) aus der ersten endständigen Stirnseite (104a) unter Bildung eines Überstands austritt und/oder der freie Randstreifen (109b) des Kathodenstromkollektors (109) aus der zweiten endständigen Stirnseite (104b) unter Bildung eines Überstands austritt,
b. auf mindestens einer der Stirnseiten (104a, 104b) des Elektroden-Separator-Verbunds wird ein Kontaktblechteil (112, 122) aufgesetzt,
c. das mindestens eine aufgesetzte Kontaktblechteil (112, 122) wird unter Deformation des jeweiligen Überstands des Anodenstromkollektors (106) und/oder des Kathodenstromkollektors (109) an der Stirnseite angepresst und mit dem Elektroden-Separator-Verbund (104) verschweißt,
d. der Elektroden-Separator-Verbund (104) mit dem mindestens einen Kontaktblechteil (112, 122) wird in ein Gehäuse (101, 102) eingesetzt,
e. der Elektroden-Separator-Verbund (104) mit dem mindestens einen Kontaktblechteil (112, 122) wird mit dem Gehäuse (101, 102) elektrisch kontaktiert,
**dadurch gekennzeichnet, dass**
f. der Elektroden-Separator-Verbund (104) mit dem mindestens einen aufgesetzten Kontaktblechteil (112, 122) während des Anpressens und Verschweißens im Schritt c. axial fixiert wird, und dass
g. die axiale Fixierung durch radiales Einspannen am Umfang des Wickelmantels (104c) erfolgt.

2. Verfahren nach Anspruch 1 mit dem folgenden zusätzlichen Merkmal:
a. Das radiale Einspannen erfolgt mittels eines Backenfutters, insbesondere mittels eines mehrsegmentigen Backenfutters.

3. Verfahren nach Anspruch 1 oder Anspruch 2 mit dem folgenden zusätzlichen Merkmal:
a. Das Verschweißen des mindestens einen Kontaktblechteils (112, 122) mit dem Elektroden-Separator-Verbund (104) erfolgt durch eine Laserbehandlung.

4. Verfahren nach einem der vorhergehenden Ansprüche mit dem folgenden zusätzlichen Merkmal:
a. Es wird auf beiden Stirnseiten (104a, 104b) des Elektroden-Separator-Verbunds (104) jeweils ein Kontaktblechteil (112, 122) aufgesetzt und an der jeweiligen Stirnseite angepresst und verschweißt.

5. Verfahren nach Anspruch 4 mit dem folgenden zusätzlichen Merkmal:
a. Zum Anpressen des jeweiligen Kontaktblechteils (112, 122) an den beiden Stirnseiten des Elektroden-Separator-Verbunds (104) wird an beiden Stirnseiten ein axialer Druck ausgeübt.

6. Verfahren nach Anspruch 5 mit dem folgenden zusätzlichen Merkmal:
a. Der an beiden Stirnseiten (104a, 104b) ausgeübte axiale Druck ist unterschiedlich.

7. Verfahren nach einem der vorhergehenden Ansprüche mit dem folgenden zusätzlichen Merkmal:
a. Die freien Randstreifen (106b, 109b) des Kathodenstromkollektors und/oder des Anodenstromkollektors werden vor dem Aufsetzen des mindestens einen Kontaktblechteils (112, 122) zumindest abschnittsweise radial nach innen umgebogen.

8. Elektrochemisches Energiespeicherelement (100), herstellbar nach einem Verfahren gemäß einem der Ansprüche 1 bis 7.

9. Elektrochemisches Energiespeicherelement nach Anspruch 8 mit dem folgenden zusätzlichen Merkmal:
a. Die deformierten Überstände des Anodenstromkollektors (106) und/oder des Kathodenstromkollektors (109) weisen einen Kompressionsgrad von 10 - 75 %, insbesondere von 20 bis 60 %, vorzugsweise von 30 bis 50 %, besonders bevorzugt von 40 ± 5 % auf.

10. Elektrochemisches Energiespeicherelement nach Anspruch 9 mit dem folgenden zusätzlichen Merkmal:
a. Die deformierten Überstände des Anodenstromkollektors (106) und des Kathodenstromkollektors (109) weisen einen identischen Kompressionsgrad auf.

11. Elektrochemisches Energiespeicherelement nach einem der Ansprüche 8 bis 10 mit mindestens einem der folgenden zusätzlichen Merkmale:
a. Das elektrochemische Energiespeicherelement (100) weist ein zylindrisches Gehäuse auf,
b. das elektrochemische Energiespeicherelement (100) ist eine zylindrische Rundzelle,
c. das elektrochemische Energiespeicherelement (100) ist eine zylindrische Rundzelle mit dem Formfaktor 18650 oder 21700.

12. Elektrochemisches Energiespeicherelement nach einem der Ansprüche 8 bis 11 mit dem folgenden zusätzlichen Merkmal:
a. Das elektrochemische Energiespeicherelement (100) ist eine Lithium-Ionen-Zelle.
